# EUROPEAN PATENT APPLICATION

(11) **EP 3 991 839 A1**
(43) Date of publication of application: **04.05.2022**
(21) Application number: 21196311.1
(22) Date of filing: 13.09.2021
(51) Int. Cl.: B01J 23/63, B01J 31/18, B01J 31/22, B01J 35/00, B01J 35/04, B01J 37/00, B01J 37/03, B01D 53/94, B01J 37/08

(54) **CATALYSTS, THEIR SYNTHESES USING ORGANO-PGM-COMPLEXES, SYSTEM CONTAINING THOSE AND PROCESS FOR EXHAUST GAS TREATMENT**

(30) Priority: 18.09.2020 US 202062706943 P; 28.04.2021 US 202163201411 P; 20.08.2021 US 202163260450 P
(71) Applicant: Johnson Matthey Public Limited Company, London EC4A 4AB (GB)
(72) Inventor: HAYASHI, Daijiro, Tochigi, 329.1412 (JP); KURASHIGE, Wataru, Tochigi, 329-1412 (JP); MURESAN, Nicoleta, Berkshire, RG4 9NH (GB); NAGAOKA, Shuhei, Tochigi, 329-1412 (JP); ZHANG, Xiaorui, Tochigi, 329-1412 (JP)
(74) Representative: Wilson, Nicola Ann

(57) **Abstract**

A three-way catalyst article, and its use in an exhaust system for internal combustion engines, is disclosed. The catalyst article for treating exhaust gas comprising: a substrate comprising an inlet end and an outlet end with an axial length L; a first catalytic region comprising a first palladium (Pd) component and a first Pd support material, wherein the substrate is substantially free of the first Pd component.

## Description

### FIELD OF THE INVENTION

The present invention relates to a catalyzed article useful in treating exhaust gas emissions from gasoline engines.

### BACKGROUND OF THE INVENTION

Internal combustion engines produce exhaust gases containing a variety of pollutants, including hydrocarbons (HCs), carbon monoxide (CO), and nitrogen oxides ("NOₓ"). Emission control systems, including exhaust gas catalytic conversion catalysts, are widely utilized to reduce the amount of these pollutants emitted to atmosphere. A commonly used catalyst for gasoline engine exhaust treatments is the TWC (three way catalyst). TWCs perform three main functions: (1) oxidation of CO; (2) oxidation of unburnt HCs; and (3) reduction of NOₓ.

Despite advances in TWC technology, there remains a need for improved catalytic converters for certain engine platforms that improve the performance especially in cold start stage where most of emission is appeared during vehicle operation. This invention solves the problem through enhancement of Pd dispersion and appropriate location control of Pd in the TWC product.

### SUMMARY OF THE INVENTION

One aspect of the present disclosure is directed to a catalytic article for treating exhaust gas comprising: a substrate comprising an inlet end and an outlet end with an axial length L; a first catalytic region comprising a first palladium (Pd) component and a first Pd support material, wherein the substrate is substantially free of the first Pd component.

Another aspect of the present disclosure is directed to a method of making a catalytic article for treating exhaust gas comprising: a) dissolving a platinum group metal (PGM) complex having a ligand coordinated to the PGM ion; b) making a PGM complex support slurry; c) mixing the dissolved PGM complex in a) with the slurry in b); d) coating the mixture in c) onto a substrate to form a first catalytic region on the substrate; wherein the ligand is selected from the group consisting of glyoxime; a glyoxime derivative; salicylaldimine, and a salicylaldimine derivative.

Another aspect of the present disclosure is directed to a method of manufacturing a catalyst article, the method comprising: providing a slurry comprising ions of at least one platinum group metal (PGM), a support material and a ligand for coordinating to the ions of at least one PGM; disposing the slurry on a substrate; and heating the slurry to form nanoparticles of the PGM on the support material; wherein the ligand is selected from the group consisting of glyoxime, a glyoxime derivative, salicylaldimine, and a salicylaldimine derivative. The invention also encompasses an exhaust system for internal combustion engines that comprises the three-way catalyst component of the invention.

The invention also encompasses treating an exhaust gas from an internal combustion engine, in particular for treating exhaust gas from a gasoline engine. The method comprises contacting the exhaust gas with the three-way catalyst component of the invention.

### BRIEF DESCRIPTION OF THE DRAWINGS

**FIG. 1** shows one embodiment according to the present invention, which contains a first catalytic region with a length of 100% to the axial length L of the substrate as top layer, and a second catalytic region extends 100% of the axial length L, as bottom layer.
**FIG. 2** shows one embodiment according to the present invention, which contains a first catalytic region with a length of 100% to the axial length L of the substrate as bottom layer, and a second catalytic region extends 100% of the axial length L, as top layer.
**FIG. 3** shows distribution ratio of Pd in bottom layer, top layer and substrate in Comparative Catalyst A and Catalyst B, estimated by electron probe micro-analysis (EPMA).
**FIG. 4** shows distribution ratio of Pd in bottom layer, top layer and substrate in Comparative Catalyst E and Catalyst F, estimated by electron probe micro-analysis (EPMA).
**FIG. 5** shows distribution ratio of Pd in bottom layer, top layer and substrate in Catalyst I and Catalyst J, estimated by electron probe micro-analysis (EPMA).

### DETAILED DESCRIPTION OF THE INVENTION

The present invention is directed to catalytic treatment of combustion exhaust gas, such as that produced by gasoline and other engines, and to related catalysts compositions, catalytic articles, and systems. More specifically, the invention relates to simultaneous treatment of NOₓ, CO, and HC in a vehicular exhaust system. While Pd is a key active site to promote the TWC reaction, for the manufacturing of TWC product, water soluble Pd and/or Pt ions have usually been used to disperse the Pd and/or Pt ions in the slurry of washcoat (i.e. mixture of oxide components). This process makes uncontrollable location of Pd and/or Pt in the washcoat to generate the migration to the other catalyst layer and the wicking to the substrate. The inventors have discovered that active precipitation of Pd and/or Pt ions using suitable organic ligands can effectively suppress the migration and wicking of Pd, and resulting emission control performance was drastically improved. This invention has a potential to meet future-expected tighter emission regulation through effective utilization of Pd and/or Pt like reduction of PGM amount used in TWC products.

One aspect of the present disclosure is directed to a catalytic article for treating exhaust gas comprising: a substrate comprising an inlet end and an outlet end with an axial length L; a first catalytic region comprising a first palladium (Pd) component and a first Pd support material, wherein the substrate is substantially free of the first Pd component.

The first catalytic region preferably further comprises a first platinum (Pt) component, wherein the first Pt component is at least partially supported on the first Pd support material, and wherein the substrate is substantially free of the first Pt component. In particular, if present, the first Pt component and the first Pd component are preferably at least partially supported together on the first Pd support material. In other words, both of the first Pt component and the first Pd component are preferably at least partially supported on the same support material, i.e. both together on each of the particles of the first Pd support material.

### First Catalytic Region

The first Pd support material can be a first oxygen storage capacity (OSC) material, a first inorganic oxide, or a combination thereof.

The first OSC material can be cerium oxide, zirconium oxide, a ceria-zirconia mixed oxide, an alumina-ceria-zirconia mixed oxide, or a combination thereof. More preferably, the first OSC material comprises the ceria-zirconia mixed oxide, the alumina-ceria-zirconia mixed oxide or a combination thereof. The ceria-zirconia mixed oxide can further comprise dopants, such as lanthanum, neodymium, praseodymium, yttrium oxides, *etc*. The first OSC material may function as a support material for the first Pd component and/or the first Pt component (*e*.*g*., as the first Pd and/or Pt support material). The first Pd support material may support both the Pd and Pt, if present. In some embodiments, the first OSC material comprises the ceria-zirconia mixed oxide and the alumina-ceria-zirconia mixed oxide.

The first inorganic oxide is preferably an oxide of Groups 2, 3, 4, 5, 13 and 14 elements. The first inorganic oxide is preferably selected from the group consisting of alumina, magnesia, silica, zirconia, barium oxides, and mixed oxides or composite oxides thereof. Particularly preferably, the first inorganic oxide is alumina, lanthanum-alumina, zirconia, or a magnesia/alumina composite oxide. One especially preferred first inorganic oxide is alumina or lanthanum-alumina.

The first OSC material and the first inorganic oxide can have a weight ratio of no greater than 10:1; preferably, no greater than 8:1 or 5:1; more preferably, no greater than 4:1 or 3:1; most preferably, no greater than 2:1.

Alternatively, the first OSC material and the first inorganic oxide can have a weight ratio of 10:1 to 1:10; preferably, 8:1 to 1:8 or 5:1 to 1:5; more preferably, 4:1 to 1:4 or 3:1 to 1:3; and most preferably, 2:1 to 1:2.

In some embodiments, the first OSC material and the first inorganic oxide can have a weight ratio of no less than 2:1. In further embodiments, the first OSC material and the first inorganic oxide can have a weight ratio of no less than 10:1. In another further embodiments, the first OSC material and the first inorganic oxide can have a weight ratio of no less than 20:1 or no less than 30:1. In yet another further embodiments, the first OSC material and the first inorganic oxide can have a weight ratio of no less than 40:1 or no less than 50:1.

The first catalytic region may further comprise a first alkali or alkaline earth metal.

The first alkali or alkaline earth metal is preferably barium, or strontium, and mixed oxides or composite oxides thereof. Preferably the barium or strontium, where present, is loaded in an amount of 0.1 to 15 wt.%, preferably 1 to 13 wt.%, and more preferably 2 to 12 wt.% of barium or strontium (calculated as BaO or SrO), based on the total weight of the first catalytic region.

Preferably the barium or the strontium is present as carbonate salt (i.e. BaCO₃ or SrCO₃) or sulfate salt (i.e. BaSO₄ or SrSO₄). In some embodiments, the barium or the strontium is present as BaSO₄ or SrSO₄. In certain embodiments, the first alkaline earth metal is Ba as sulfate salt. In other embodiments, the first alkaline earth metal is Sr as sulfate salt. Such a material can be performed by any method known in the art, for example incipient wetness impregnation or spray-drying. More preferably, barium or the strontium is present as sulfate salt.

The expression "substantially free of" as used herein with reference to the first Pd component and/or the first Pt component in the substrate means that the first Pd component and/or the first Pt component in a minor amount (such as ≤ 15 % by weight, preferably ≤ 10 % by weight, more preferably ≤ 6% by weight of the total first Pd component and/or first Pt component; or alternatively, the ratio of Pd and/or Pt in the substrate and the first Pd component and/or first Pt component in the first catalytic region is ≤ 1:6 preferably ≤ 1:9, more preferably ≤ 1: 15) has migrated into the substrate from the first catalytic region.

Throughout the application, Pd and/or Pt amount in different regions and/or substrate can be measured by electron probe micro-analysis (EPMA).

The substrate can be essentially free of the first Pd component. The substrate can be essentially free of the first Pt component.

The expression "essentially free of" as used herein with reference to the first Pd component and/or first Pt component in the substrate means that the first Pd component and/or first Pt component in a minor amount (such as ≤ 7 % by weight, preferably ≤ 5 % by weight, more preferably ≤ 2 % by weight of the total first Pd component and/or first Pt component; or alternatively, the ratio of Pd and/or Pt in the substrate and the first Pd component and/or first Pt component in the first catalytic region is ≤ 1:10, preferably ≤ 1:20, more preferably ≤ 1: 30) has migrated into the substrate from the first catalytic region.

As demonstrated in the Examples below, the catalyst article in this aspect can be applied as a TWC catalyst for treating exhaust gas produced by gasoline engines.

The total washcoat loading of the first catalytic region can be less than 3.5 g/in³; preferably, less than 3.0 g/in³ or 2.5 g/in³. Alternatively, the total washcoat loading of the first catalytic region can be from 0.5 to 3.5 g/in³; preferably, can be from 0.6 to 3 g/in³ or 0.7 to 2.5 g/in³.

### Second Catalytic Region

The catalytic article may further comprise a second catalytic region.

The second catalytic region can further comprise a second PGM component, a second oxygen storage capacity (OSC) material, a second alkali or alkaline earth metal component, and/or a second inorganic oxide.

The second PGM component can be selected from the group consisting of platinum, palladium, rhodium, and a mixture thereof. In some embodiments, the second PGM component can be Pd, Rh or a mixture thereof. In some embodiments, the second PGM component can be Rh, Pt or a mixture thereof. In further embodiments, the second PGM component can be Rh.

The second OSC material can be cerium oxide, zirconium oxide, a ceria-zirconia mixed oxide, an alumina-ceria-zirconia mixed oxide, or a combination thereof. More preferably, the second OSC material comprises the ceria-zirconia mixed oxide, the alumina-ceria-zirconia mixed oxide, or a combination thereof. In addition, the second OSC material may further comprise one or more of dopants like lanthanum, neodymium, praseodymium, yttrium *etc*. Moreover, the second OSC material may have the function as a support material for the second PGM component. In some embodiments, the second OSC material comprises the ceria-zirconia mixed oxide and the alumina-ceria-zirconia mixed oxide.

The ceria-zirconia mixed oxide can have a weight ratio of zirconia to ceria at least 50:50; preferably, higher than 60:40; more preferably, higher than 70:30. Alternatively, the ceria-zirconia mixed oxide also can have a weight ratio of ceria to zirconia less than 50:50, preferably, less than 40:60, more preferably, less than 30:70.

The second OSC material (*e.g*., ceria-zirconia mixed oxide) can be from 10 to 90 wt.%; preferably, 25-75 wt.%; more preferably, 30-60 wt.%, based on the total washcoat loading of the second catalytic region.

The second OSC material loading in the second catalytic region can be less than 2 g/in³. In some embodiments, the second OSC material loading in the second catalytic region is no greater than 1.5 g/in³, 1.2 g/in³, 1 g/in³, 0.8 g/in³, or 0.7 g/in³.

The second alkali or alkaline earth metal is preferably barium, strontium, mixed oxides or composite oxides thereof. Preferably the barium or strontium, where present, is in an amount of 0.1 to 15 wt.%, and more preferably 3 to 10 wt.% of barium or strontium, based on the total weight of the second catalytic region.

It is even more preferable that the second alkali or alkaline earth metal is strontium. The strontium, where present, is preferably present in an amount of 0.1 to 15 wt.%, and more preferably 3 to 10 wt.%, based on the total weight of the second catalytic region.

It is also preferable that the second alkali or alkaline earth metal is mixed oxides or composite oxide of barium and strontium. Preferably, the mixed oxides or composite oxide of barium and strontium is present in an amount of 0.1 to 15 wt.%, and more preferably 3 to 10 wt.%, based on the total weight of the second catalytic region. It is more preferable that the second alkali or alkaline earth metal is composite oxide of barium and strontium.

Preferably the barium or strontium is present as BaCO₃ or SrCO₃. Such a material can be performed by any method known in the art, for example incipient wetness impregnation or spray-drying.

The second inorganic oxide is preferably an oxide of Groups 2, 3, 4, 5, 13 and 14 elements. The second inorganic oxide is preferably selected from the group consisting of alumina, magnesia, silica, zirconia, barium oxides, and mixed oxides or composite oxides thereof. Particularly preferably, the second inorganic oxide is alumina, lanthanum-alumina, zirconia, or a magnesia/alumina composite oxide. One especially preferred second inorganic oxide is alumina or lanthanum-alumina.

The second OSC material and the second inorganic oxide can have a weight ratio of no greater than 10:1; preferably, no greater than 8:1 or 5:1; more preferably, no greater than 4:1 or 3:1; most preferably, no greater than 2:1.

Alternatively, the second OSC material and the second inorganic oxide can have a weight ratio of 10:1 to 1:10; preferably, 8:1 to 1:8 or 5:1 to 1:5; more preferably, 4:1 to 1:4 or 3:1 to 1:3; and most preferably, 2:1 to 1:2.

In some embodiments, the second OSC material and the second inorganic oxide can have a weight ratio of no less than 2:1. In further embodiments, the second OSC material and the second inorganic oxide can have a weight ratio of no less than 10:1. In another further embodiments, the second OSC material and the second inorganic oxide can have a weight ratio of no less than 20:1 or no less than 30:1. In yet another further embodiments, the second OSC material and the second inorganic oxide can have a weight ratio of no less than 40:1 or no less than 50:1.

The total washcoat loading of the second catalytic region can be less than 3.5 g/in³; preferably, less than 3.0 g/in³ or 2.5 g/in³. Alternatively, the total washcoat loading of the first catalytic region can be from 0.5 to 3.5 g/in³; preferably, can be from 0.6 to 3 g/in³ or 0.7 to 2.5 g/in³.

In some embodiments, the first catalytic region can be supported/deposited directly on the substrate.

In certain embodiments, the second catalytic region can be supported/deposited directly on the substrate. The second catalytic region can be substantially free of the first Pd component and/or first Pt component. The expression "substantially free of" as used herein with reference to the first Pd component and/or first Pt component in the second catalytic region means that the first Pd component and/or first Pt component in a minor amount (such as ≤ 20 % by weight, preferably ≤ 10 % by weight, more preferably ≤ 7% by weight of the total first Pd component and/or first Pt component; or alternatively, the ratio of Pd and/or Pt in the second catalytic region and the first Pd component and/or first Pt component in the first catalytic region is ≤ 1:4; preferably ≤ 1:9; more preferably ≤ 1: 10, ≤ 1: 12, or even ≤ 1: 15) has migrated into the second catalytic region from the first catalytic region.

### Substrate

Preferably the substrate is a flow-through monolith. Alternatively, the substrate can be a wall-flow filter.

The flow-through monolith substrate has a first face and a second face defining a longitudinal direction there between. The flow-through monolith substrate has a plurality of channels extending between the first face and the second face. The plurality of channels extends in the longitudinal direction and provide a plurality of inner surfaces (e.g. the surfaces of the walls defining each channel). Each of the plurality of channels has an opening at the first face and an opening at the second face. For the avoidance of doubt, the flow-through monolith substrate is not a wall flow filter.

The first face is typically at an inlet end of the substrate and the second face is at an outlet end of the substrate.

The channels may be of a constant width and each plurality of channels may have a uniform channel width.

Preferably within a plane orthogonal to the longitudinal direction, the monolith substrate has from 300 to 900 channels per square inch, preferably from 400 to 800. For example, on the first face, the density of open first channels and closed second channels is from 600 to 700 channels per square inch. The channels can have cross sections that are rectangular, square, circular, oval, triangular, hexagonal, or other polygonal shapes.

The monolith substrate acts as a support for holding catalytic material. Suitable materials for forming the monolith substrate include ceramic-like materials such as cordierite, silicon carbide, silicon nitride, zirconia, mullite, spodumene, alumina-silica magnesia or zirconium silicate, or of porous, refractory metal. Such materials and their use in the manufacture of porous monolith substrates are well known in the art.

It should be noted that the flow-through monolith substrate described herein is a single component (i.e. a single brick). Nonetheless, when forming an emission treatment system, the substrate used may be formed by adhering together a plurality of channels or by adhering together a plurality of smaller substrates as described herein. Such techniques are well known in the art, as well as suitable casings and configurations of the emission treatment system.

In embodiments wherein the catalyst article of the present comprises a ceramic substrate, the ceramic substrate may be made of any suitable refractory material, e.g., alumina, silica, ceria, zirconia, magnesia, zeolites, silicon nitride, silicon carbide, zirconium silicates, magnesium silicates, aluminosilicates and metallo aluminosilicates (such as cordierite and spodumene), or a mixture or mixed oxide of any two or more thereof. Cordierite, a magnesium aluminosilicate, and silicon carbide are particularly preferred.

In embodiments wherein the catalyst article of the present invention comprises a metallic substrate, the metallic substrate may be made of any suitable metal, and in particular heat-resistant metals and metal alloys such as titanium and stainless steel as well as ferritic alloys containing iron, nickel, chromium, and/or aluminium in addition to other trace metals.

Another aspect of the present disclosure is directed to a method for treating a vehicular exhaust gas containing NOₓ, CO, and HC using the catalyst article described herein. Catalytic converters equipped with the TWC made according to this method show improved catalytic properties compared to conventional TWC (with the same PGM loading), also show especially improved performance in cold start stage and better THC light off performance (*e.g., see* Examples 2-4; and **Tables 3-6**).

Another aspect of the present disclosure is directed to a system for treating vehicular exhaust gas comprising the catalyst article described herein in conjunction with a conduit for transferring the exhaust gas through the system.

Another aspect of the present disclosure is directed to a method of making a catalytic article for treating exhaust gas comprising: a) dissolving a platinum group metal (PGM) complex having a ligand coordinated to the PGM ion; b) making a PGM complex support slurry; c) mixing the dissolved PGM complex in a) with the slurry in b); d) coating the mixture in c) onto a substrate to form a first catalytic region on the substrate; wherein the ligand is selected from the group consisting of glyoxime; a glyoxime derivative; salicylaldimine, and a salicylaldimine derivative. Preferably, the PGM ion is Pd and/or Pt.

### PGM Complex

Complexes capable of forming a "chain-like" arrangement have been described in the literature, *see e*.*g*. Day (Chimica Acta Reviews, 1969, 81), Thomas and Underhill (Chem. Soc. Rev. 1, 99 1972); Kamata et al. (Mol. Cryst. Liq. Cryst., 1995, 267, 117).

These references describe that two main kinds of compounds can form such arrangements. These are metal glyoximes, metal salicylaldimines and derivatives of each of these. These kinds of compounds are expected to be particularly suitable for use in the present invention. Each of these kinds of compounds can act as a bidentate ligand. The glyoxime-based ligands can coordinate to the central metal atom by two N atoms and the salicylaldimine-based ligands through one N and one O atom.

A more detailed description of metal glyoximes, metal salicylaldimines and their respective derivatives follows now.

### Metal Glyoximes and Derivatives Thereof

Metal glyoxime-based compounds comprise a metal atom and an appropriate number of glyoxime or glyoxime derivatives surrounding the metal atom. In the present invention, the metal is a transition metal, and there are (usually two) glyoxime or glyoxime derivatives surrounding the transition metal ion. Such compounds generally form a substantially square planar arrangement.

The present invention preferably employs metal glyoxime or metal glyoxime derivative as metal ion-containing compound, and most preferably a metal glyoxime derivative.

Glyoxime has the formula C₂H₄N₂O₂. It has the following structure (only one conformation is shown):

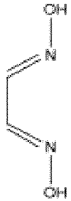

The two N atoms of each glyoxime molecule generally coordinate to the central metal ion in the resulting complexes.

A glyoxime derivative, as used herein, is glyoxime in which at least one hydrogen of the two C-H groups is substituted for an optionally substituted R group. Thus, a glyoxime derivative can be described by the formula (HO)N=C(R¹)-C(R²)=N(OH).
In the present invention, each of R¹ and R² is independently H, hydroxy, alkoxy, carboxy or optionally substituted alkyl, aryl or heteroaryl group. Thus, where each of R¹ and R² is H, glyoxime results. Where one of R¹ and R² is not H, a glyoxime derivative results. Preferably, R¹=R² i.e. preferably the glyoxime or derivative thereof is symmetrical. In some preferred embodiments, R¹ and R² are not both H.

Thus, a glyoxime derivative can have a -R'OH, -R'COOH or optionally substituted alkyl, optionally substituted aryl, or optionally substituted heteroaryl substituent in place of at least one, and preferably both, of the hydrogens attached to the carbon backbone of the glyoxime molecule. The expression "optionally substituted alkyl, aryl or heteroaryl" herein means that each of the alkyl aryl or heteroaryl groups can be optionally substituted. The group R' represents a single bond or alkyl group as defined below.

Preferably, the glyoxime derivative has an optionally substituted alkyl, aryl or heteroaryl group.

Where R¹ and/or R² is an alkyl group, the alkyl can be linear, branched or cyclic. Cyclic alkyl encompasses the situation wherein R¹ and/or R² are independently cyclic alkyl groups, and wherein R¹and R² join to each other to form a cyclic alkyl. Linear or branched alkyl can be C₁₋₁₀ alkyl, preferably C₁₋₇ alkyl and more preferably C₁₋₃ alkyl. In certain preferred embodiments, R¹ and/or R² is C₁ alkyl (i.e. methyl). Cyclic alkyl (also called cycloalkyl) can be C₃₋₁₀ cycloalkyl, preferably C₅₋₇ cycloalkyl, and more preferably C₆ cycloalkyl.

In the most preferred embodiments, R¹=R²=C₁ alkyl.

Where R¹ and/or R² is aryl, this means aromatic hydrocarbon. Suitably, aryl means a C₆₋₉ aromatic group e.g. a phenyl or naphthyl group. Particularly preferred are phenyl (C₆) based aryl groups.

Where R¹ and/or R² is heteroaryl, this means aromatic hydrocarbon wherein one or more, preferably one, of the ring atoms is a nitrogen, oxygen or sulfur group. Preferably one of the ring atoms is nitrogen or oxygen, and particularly preferably it is oxygen. The heteroaryl group usually contains 5 to 7 ring atoms, including the heteroatom(s). Examples of suitable heteroaryl groups include pyridine, pyrazine, pyrrole, imidazole, pyrazole, oxazole, thiophene and furan. In preferred embodiments, the heteroaryl group is a furan. The heteroatom can be placed at any orientation, but is preferably in the alpha position.

The optional substituents of the R¹/R² groups are independently typically -R'OH, - R'COOH, or unsubstituted linear or branched C₁₋₁₀ alkyl, C₅₋₇ aryl or C₅₋₇ heteroaryl. R' is as defined above. Preferably, the optional substituents are C₁₋₁₀ alkyl, and most preferably C₁₋₅ alkyl. Preferably, there is only one of the optional substituents present, if any.

Examples of suitable glyoxime derivatives in accordance with the above are: isopropylnioxime, 4-t-amylnioxime, nioxime, 4-methylnioxime, dimethylglyoxime, ethylmethylglyoxime, furil-α-dioxime, 3-methylnioxime, benzil-α-dioxime, heptoxime.

Particularly preferred in the methods described herein are metal dimethylglyoximes (metal-DMGs). Dimethyl glyoxime has the following structure:

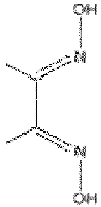

Typically, in accordance with the above, there are two DMG molecules surrounding each metal centre in a square planar configuration. For example, when Pd is the central ion and the glyoxime derivative is DMG, bis(dimethylglyoximato) palladium (II) is the metal glyoxime derivative precursor:

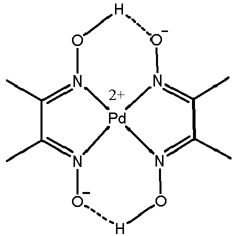

Different kinds of glyoxime or derivative can be used to provide the same metal. For example, a source of Pd may be Pd-DMG₂ and Pd-nioxime₂. Typically, only one kind of glyoxime or derivative thereof is used to provide a single kind of metal. Different kinds of glyoxime or derivative thereof can be present in the same complex, e.g. Pd-DMG-nioxime, though this is not typical.

In embodiments in which there are more than one metal ion-containing compound, and where more than one kind of metal ion-containing compound is a glyoxime or derivative thereof, it is not necessary that the glyoxime or derivative thereof be the same for each different kind of metal centre. For example, a Pd-containing compound may be Pd-DMG₂ while a Pt-containing compound may be Pt-nioxime₂. However, typically, only one kind of metal glyoxime or precursor thereof is provided for each kind of metal ion, e.g. Pd-DMG₂ and Pt-DMG₂.

### Salicylaldimines and Derivatives Thereof

Salicylaldimine-based compounds comprise a metal atom and an appropriate number of salicylaldimine or salicylaldimine derivatives surrounding the metal atom. In the present invention, the metal is a transition metal, and there are two salicylaldimine or salicylaldimine derivatives surrounding the transition metal ion. Suitable compounds have a substantially square planar arrangement. It is noted that salicylaldimine containing complexes are sometimes known as salicylaldiminate or salicylaldiminato complexes.

Salicylaldimine has the formula C₇H₇NO. It has the following structure (only one conformation shown):

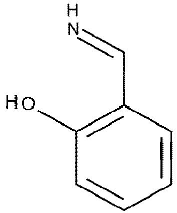

Each of the N and O atoms of each salicylaldimine molecule coordinates to the central metal ion in the resulting complex. The N atom is usually shown as being positively charged when coordinated to a metal centre.

A metal salicylaldimine derivative, as used herein, means a complex having two salicylaldimine derivatives coordinated to the central metal ion through their N and O atoms. A salicylaldimine derivative, as used herein, is salicylaldimine in which the hydrogen of the N-H group is substituted for an optionally substituted group R³ i.e. they are N-methyl derivatives. Thus, a salicylaldimine derivative can be described by the formula (R³)N=CH-Ph-OH where Ph represents phenyl and the OH group is located ortho to the (R³)N=CH group.

In the present invention, R³ is H, hydroxy, alkoxy, carboxy or optionally substituted alkyl, aryl or heteroaryl group. Thus, where R³ is H, salicylaldimine results. Where R³ is not H, a salicylaldimine derivative results.

Thus, a salicylaldimine derivative can have a -R'OH, -R'COOH or optionally substituted alkyl, aryl or heteroaryl group in place of the H attached to the N atom. The group R' represents a single bond or alkyl group as defined below.

Where R³ is an alkyl group, the alkyl can be linear, branched or cyclic. Linear or branched alkyl can be C₁₋₁₀ alkyl, preferably C₁₋₇ alkyl and more preferably C₁₋₃ alkyl. In certain embodiments, R³ is C₁ alkyl (i.e. methyl). Cyclic alkyl (also called cycloalkyl) can be C₃₋₁₀ cycloalkyl, preferably C₅₋₇ cycloalkyl, and more preferably C₆ cycloalkyl.

Where R³ is aryl, this means aromatic hydrocarbon. Suitably, aryl means a C₆₋₉ aromatic group e.g. a phenyl or naphthyl group, preferably phenyl (C₆) based aryl group.

Where R³ is heteroaryl, this means aromatic hydrocarbon wherein one or more, preferably one, of the ring atoms is a nitrogen, oxygen or sulfur group. Preferably one of the ring atoms is nitrogen or oxygen, and particularly preferably it is oxygen. The heteroaryl group usually contains 5 to 7 ring atoms, including the heteroatom(s). Examples of suitable heteroaryl groups include pyridine, pyrazine, pyrrole, imidazole, pyrazole, oxazole, thiophene and furan. In preferred embodiments, the heteroaryl group is a furan. The heteroatom can be placed at any orientation, but is preferably in the alpha position.

The optional substituents of the R³ group are typically -R'OH, -R'COOH, or unsubstituted linear or branched C₁₋₁₀ alkyl, C₅₋₇ aryl or C₅₋₇ heteroaryl. R' is as defined above. Preferably, the optional substituents are C₁₋₁₀ alkyl, and most preferably C₁₋₅ alkyl. Preferably, there is only one of the optional substituents present, if any.

Most preferably, in the salicylaldimine derivatives, R³ is unsubstituted alkyl or aryl, and most preferably unsubstituted alkyl. In the most preferred embodiments, R³ is C₁ alkyl.

A particularly suitable salicylaldimine derivative in accordance with the above is N-methylsalicylaldimine.

As with the glyoxime-based metal ion-containing compounds, different kinds of salicylaldimine or derivative can be used to provide the same metal. Typically, only one kind of salicylaldimine or derivative thereof is used to provide a single kind of metal.

As with the glyoxime-based metal ion-containing compounds, where more than one kind of metal ion-containing compound is a salicylaldimine or derivative thereof, it is not necessary that the salicylaldimine or derivative thereof be the same for each different kind of metal centre, or the same in a single complex. However, typically, only one kind of metal salicylaldimine or precursor thereof is provided for each kind of metal ion and in a single complex.

Also envisioned are embodiments in which at least one metal is provided by a metal salicylaldimine-based compound and at least one metal is provided by a metal glyoxime-based compound.

### PGM Metal Centers

The PGM can be selected from the group consisting of platinum, palladium, rhodium, and a mixture thereof. In some embodiments, the PGM can be Pd, Rh or a mixture thereof. In some embodiments, the PGM can be Rh, Pt or a mixture thereof. In some embodiments, the PGM can be Pd, Pt or a mixture thereof. In some embodiments, the PGM can be Rh. In some embodiments, the PGM can be Pt. In some embodiments, the PGM can be Pd.

### Provision of PGM Complex

The PGM complex may be purchased directly. Alternatively, they may be synthesized from precursors using methods known to the skilled person.

By way of example for the glyoxime or derivative thereof, synthesis from precursors generally involves the combination of a glyoxime-based ligand such as dimethylglyoxime (DMG) with a metal salt and forming a solution, typically an aqueous solution. A precipitate of the metal glyoxime or derivative thereof results.

Typically, metal: ligand ratios of around 1:2 are used. The range may be between 1:10 to 1:2, such as 1:5 to 1:2. Higher proportions of metal are less preferred due to cost.

As an example, to prepare bis(dimethylglyoximato) palladium (II), an exemplary approach is as follows:

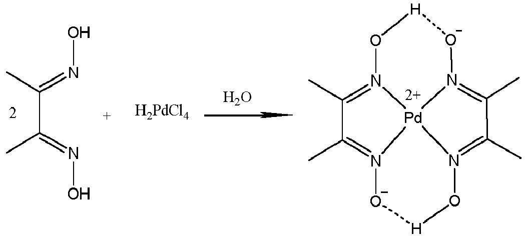

The metal glyoxime or derivative thereof that precipitates can be purified (i.e. separated from other components of the solution) in an appropriate manner e.g. by filtration and/or washing and/or drying. The skilled person will be aware of suitable purification steps.

Suitable PGM metal salts will be known to the skilled person, but non-limiting examples may include one or more selected from metal halides, metal nitrates, and metal acetates.

In some embodiments, the glyoxime-containing solution is acidified before it is stirred and/or heated. The skilled person can choose from among suitable acids, which may be weak or strong according to preference. Typically, the acid is organic. Non-limiting examples may include carboxylic acids such as formic acid or acetic acid.

Preferably in the methods described herein, powders of the one or more PGM complexes can be added to a solvent to form a solution containing the dissolved PGM complex(es). Where more than one kind of PGM complex is used, they may be provided as separate solutions (and using different solvents if wanted), such that the separate solutions are later combined, or they may be dissolved together in a single solution. Suitable solvents include water (and aqueous solutions), and polar organic solvents. As examples of suitable polar organic solvents, mention is made of DMF and DMSO, though the invention is not limited thereto. Mixtures of suitable solvents may be used. Preferably, the solvent is aqueous. The formation of an aqueous solution can be advantageous from a safety and manufacturing perspective.

In some preferred embodiments, the PGM complex(es) (especially a metal glyoximes or derivatives thereof) may be dissolved to form aqueous solution(s) by adding a base. Suitably, the solution(s) containing the metal-ion containing compound(s) is alkaline. The pH is preferably more than 8, e.g. 9. Suitable bases will be known to the skilled person, but include for example ammonium derivatives such as ammonium hydroxide and tetraethylammonium hydroxide, or sodium hydroxide and potassium hydroxide.

In a general way, the solution(s) of the PGM complex(es) prepared as described above can be combined with a PGM complex support. The PGM complex support can be present in another, compatible, liquid if wanted. Thus, it can suitably be a suspension or dispersion in the liquid. This further liquid is thus preferably polar, most preferably aqueous. An aqueous or polar liquid is expected to assist in the dissolution of the PGM complex(es).

The PGM complex support material can be an oxygen storage capacity (OSC) material, an inorganic oxide, or a combination thereof.

The OSC material can be cerium oxide, zirconium oxide, a ceria-zirconia mixed oxide, an alumina-ceria-zirconia mixed oxide, or a combination thereof. More preferably, the OSC material comprises the ceria-zirconia mixed oxide, the alumina-ceria-zirconia mixed oxide or a combination thereof. The ceria-zirconia mixed oxide can further comprise dopants, such as lanthanum, neodymium, praseodymium, yttrium oxides, *etc*. In some embodiments, the OSC material comprises the ceria-zirconia mixed oxide and the alumina-ceria-zirconia mixed oxide.

The inorganic oxide is preferably an oxide of Groups 2, 3, 4, 5, 13 and 14 elements. The inorganic oxide is preferably selected from the group consisting of alumina, magnesia, silica, zirconia, barium oxides, and mixed oxides or composite oxides thereof. Particularly preferably, the inorganic oxide is alumina, lanthanum-alumina, zirconia, or a magnesia/alumina composite oxide. One especially preferred inorganic oxide is alumina or lanthanum-alumina.

The PGM complex support slurry can further comprise an alkali or alkaline earth metal. The alkali or alkaline earth metal is preferably barium, or strontium, and mixed oxides or composite oxides thereof. Preferably the barium or strontium, where present, is loaded in an amount of 0.1 to 15 wt.%, and more preferably 3 to 10 wt.% of barium or strontium, based on the total weight of the first catalytic region. Preferably the barium or the strontium is present as BaCO₃ or SrCO₃. Such a material can be performed by any method known in the art, for example incipient wetness impregnation or spray-drying.

The PGM complex(es) are suitably mixed with the support. Suitable methods will be known to the skilled person, but for example it is possible to combine an appropriate quantity of each desired PGM complex to form a mixture of PGM complex(es), which is preferably a mixture of metal glyoximes or derivatives thereof, together with the support.

Suitable coating method in d) is well known to the skilled person. (*e*.*g*., Johnson Matthey's "Precision Coating" technology according to US 6,599,570) The mixture obtained in c) can be applied to a suitable substrate as a suitable washcoat.

The method can further comprise c1) [after c) before d)]: adjusting pH to precipitate the PGM complex in the mixture from c). Suitable precipitation methods include adjusting pH from acidic to basic.

The method can further comprise e) calcining the first catalytic region on the substrate. Suitable calcination methods are also well known to the skilled person (*e*.*g*., 500 °C).

The catalytic articles described in the first aspect of this disclosure can be obtained/made by the methods described in this aspect.

In a further aspect, the present invention provides a method of manufacturing a catalyst article, the method comprising:
providing a slurry comprising ions of at least one platinum group metal (PGM), a support material and a ligand for coordinating to the ions of at least one PGM;
disposing the slurry on a substrate; and
heating the slurry to form nanoparticles of the PGM on the support material;
wherein the ligand is selected from the group consisting of glyoxime, a glyoxime derivative, salicylaldimine, and a salicylaldimine derivative.

Each aspect or embodiment as defined herein may be combined with any other aspect(s) or embodiment(s) unless clearly indicated to the contrary. In particular, any features indicated as being preferred or advantageous may be combined with any other feature indicated as being preferred or advantageous.

The inventors have discovered that active precipitation of Pd and/or Pt ions using suitable organic ligands may effectively suppress the migration and wicking of Pd, and resulting emission control performance may be drastically improved. This invention has a potential to meet future-expected tighter emission regulation through effective utilization of Pd and/or Pt like reduction of PGM amount used in TWC products.

In particular, surprisingly, when used in an emission treatment system, catalyst articles manufactured by the method of the present aspect may effectively suppress the migration and wicking of PGMs compared to conventional methods using, for example, palladium nitrate precursors. As a result, emission control performance can be drastically improved. Without wishing to be bound by theory, it is hypothesized that this may be due to the use of the ligands described herein, which may increase the strength of the interactions between the support material and the PGM species, compared to the use of PGM nitrates or other conventional methods, for example. For example, the slurry may comprise a complex of the one or more PGMs and one or more of the ligands, as described herein. Such a complex may be formed *in situ* or may be added to/included in the slurry pre-formed, for example, i.e. as a PGM precursor. Such a complex may form attractive interactions, such as electrostatic forces, hydrogen bonds, coordinate bonds, covalent bonds, and/or ionic bonds, for example, with the support material.

Moreover, it has also surprisingly been found that (either independently or as a result of the above-described advantages), when used in an emission treatment system, catalyst articles manufactured by the method of the present aspect may exhibit comparable or improved CO, HC and NOₓ conversion, and also comparable or improved light-off performance.

The term "catalyst article" used herein may encompass an article in which a catalyst is supported thereon or therein. The article may preferably take the form of, for example, a honeycomb monolith, or a filter, e.g. preferably a wall flow filter or a flow-through filter. The catalyst article may be for use in an emission treatment system, in particular an emission treatment system for a gasoline engine, preferably a stoichiometric gasoline engine. The catalyst article may be for use in three-way catalysis. In other words, the catalyst article may be a TWC article.

The term "slurry" as used herein may encompass a liquid comprising insoluble material, e.g. insoluble particles. The slurry may comprise (1) solvent; (2) soluble content, e.g. free PGM ions (i.e. outside of the support); and (3) insoluble content, e.g. supported particles. A slurry is particularly effective at disposing a material onto a substrate, in particular for maximized gas diffusion and minimized pressure drop during catalytic conversion. The slurry is typically stirred, more typically for at least 10 minutes, more typically for at least 30 minutes, even more typically for at least an hour. The stirring of the slurry may occur prior to disposing the slurry on the substrate, for example. The slurry may be stirred prior to and/or after addition of the ligand. Stirring that occurs after the addition of the ligand may help to ensure that there is sufficient chance for a complex of the PGM and the ligand to form, for example. The slurry therefore typically comprises a loaded support material (i.e. the support material is preferably a loaded support material). The term "loaded support material" as used herein may encompass a support material that has the PGM ions loaded thereon (e.g. on the surface of a high-surface area metal oxide support material) and/or loaded therein (e.g. within the pores of a zeolite support material). The PGM ions are typically fixed to the support, for example by electrostatic forces, hydrogen bonds, coordinate bonds, covalent bonds, and/or ionic bonds. The support material is preferably the first Pd support material described herein with reference to other aspects.

The ligand is for coordinating to the ions of at least one PGM, i.e. is suitable therefor. The term "ligand" as used herein is used interchangeably to encompass both the compound in its neutral state (i.e. a precursor to the form of the ligand in a complex that may form in the slurry), for example, which may be added to the slurry and form a complex with the one or more PGM ions, and the ligand itself (for example, a negative ion or conjugate base of the ligand compound) that is contained within a complex that may form in the slurry. In other words, the term "ligand" as used herein encompasses any form of the compound that is for coordinating to the ions of at least one PGM, such as, the neutral precursor to the ligand, or a conjugate base thereof, for example, depending on the context. The skilled person would easily understand when the context implies either use of the term. For example, a solid powder of the ligand may refer to the neutral form of the ligand, i.e. the ligand precursor, and the ligands comprised within the slurry may be in the form of a conjugate base thereof. Complexes that may form in the slurry and the form of the ligands therein are described elsewhere herein.

Disposing the slurry on a substrate may be carried out using techniques known in the art. Typically, the slurry may be poured into the inlet of the substrate using a specific moulding tool in a predetermined amount, thereby disposing the loaded support material on the substrate. As discussed in more detail below, subsequent vacuum and/or air knife and/or and drying steps may be employed during the disposition step. When the support is a filter block, the loaded support material may be disposed on the filter walls, within the filter walls (if porous) or both.

Heating the slurry is typically carried out in an oven or furnace, more typically a belt or static oven or furnace, typically in hot air at a specific flow from one direction. The heating may comprise calcination. The heating may also comprise drying. The drying and calcination steps may be continuous or sequential. For example, a separate washcoat may be applied after the substrate is already washcoated and dried with a previous washcoat. A washcoated substrate can also be dried and calcined using one continuous heating program if coating is completed. During the heating, any complex that may have formed in the solution may at least partially, substantially or completely decompose. In other words, the ligands of such a complex, e.g. an organic compound, may be at least partially, substantially or completely removed or separated from the PGM ions, and may be removed from the final catalyst article. Particles of such separated palladium may then begin to form metal-metal and metal-oxide bonds. As a result of the heating (calcination), the substrate is typically substantially free of the organic compound, more typically completely free of the organic compound.

The term "nanoparticle" as used herein may encompass a particle having a diameter of from 0.01 nm to 100 nm as measured by TEM. The nanoparticles may be in any shape, *e.g.* a sphere, a plate, cubic, cylindrical, hexagonal or a rod, but are typically spherical.

Following the heating step, the substrate is typically cooled, more typically to room temperature. The cooling is typically carried out in air with or without cooling agent/media, typically without cooling agent.

The PGM preferably comprises palladium (Pd) and/or platinum (Pt), more preferably Pd, or Pd and Pt. The PGM preferably consists essentially of, or even consists of Pd and/or Pt, more preferably Pd, or Pd and Pt. In other words, the ions of at least one PGM preferably comprise, consist essentially of or even consist of ions of Pd and/or Pt, more preferably ions of Pd, or Pd and Pt.

When the PGM comprises, consists essentially of or consists of Pd and Pt, the Pt:Pd molar ratio is preferably from about 5:95 to about 50:50. In other words, the PGM preferably has from about 5 to about 50 mol.% Pt, based on the total moles of Pt and Pd. When the PGM consists of Pt and Pd, the PGM therefore preferably comprises about 5 to about 50 mol.% Pt, based on the total moles of PGM.

When the PGM comprises, consists essentially of or consists of Pd and Pt, the Pt:Pd molar ratio is preferably from about 5:95 to about 25:75, more preferably from about 7:93 to about 20:80, even more preferably from about 9:91 to about 15:85, still even more preferably from about 9:91 to about 12:88, and most preferably about 10:90, for example preferably any of from about 7:93 to about 15:85, from about 7:93 to about 14:86, from about 7:93 to about 13:87, from about 7:93 to about 12:88, from about 7:93 to about 11:89, from about 8:92 to about 15:85, from about 8:92 to about 14:86, from about 8:92 to about 13:87, from about 8:92 to about 12:88, from about 8:92 to about 11:89, from about 9:91 to about 14:86, or from about 9:91 to about 13:87. In some preferred embodiments, the Pt:Pd molar ratio may be from about 9:91 to about 11:89.

The inventors have also surprisingly found that replacing approaching about 10 mol.% Pd with Pt in a Pd-containing catalyst, such as a TWC catalyst, may provide improved catalytic performance as described herein, while also providing for a lower cost catalyst composition due to the current difference in price between Pt and Pd.

Surprisingly, when used in an emission treatment system, catalyst articles manufactured by the method of the present aspect may also provide for a more evenly, i.e. more homogeneously, distributed PGM on the support material, both in terms of spread of particles on the support material and in terms of a more uniform particle size distribution of the PGM nanoparticles. Without wishing to be bound by theory, it is hypothesized that such a property may be advantageous by providing a more even level of catalytic activity throughout the catalyst article and also may help limit deactivation on ageing, due to limiting Ostwald ripening, for example. Moreover, when two or more PGMs are used, for example, such a method may advantageously improve the correlation of different PGM nanoparticles (i.e. the number of close interactions between neighbouring nanoparticles of different PGMs, for example). This may increase the likelihood that nanoparticles of an alloy of two or more PGMs may form on the support material.

When the PGM comprises, consists essentially of or consists of a mixture of Pd and Pt, the Pt and Pd in the catalyst article are preferably at least partially alloyed, more preferably substantially alloyed, even more preferably completely alloyed. The term "alloy" or "alloyed" as used herein takes on its usual meaning in the art. TEM and XRD characterisation techniques may be used to help determine whether or not a Pt-Pd alloy has formed, using techniques known to the skilled person. Without wishing to be bound by theory, it is hypothesised that the formation of such an alloy may contribute to the achievement of the advantageous properties, such as comparable or improved catalytic activity, lower light-off temperatures and resistance to ageing described and demonstrated herein. Such an alloy of the Pt and Pd may form during the manufacture of the catalyst composition, such as during a calcining and/or heating step that may be performed. Alternatively, such an alloy may form during use (e.g. ageing) of the catalyst composition, due to the high temperatures experienced in exhaust systems, for example. That is, a mixture of Pt and Pd nanoparticles that may be in close proximity on the support material may coalesce and form an alloy at such temperatures, for example. The likelihood of such potentially beneficial alloying occurring may be increased by use of the method of the present aspect, compared to conventional methods using PGM nitrate precursors, for example.

In some embodiments, a pre-formed complex of the ions of at least one PGM and the ligand may be used. For example, providing a slurry may comprise contacting a pre-formed PGM-ligand complex as described herein with a slurry comprising the support material.

However, providing a slurry preferably comprises:
providing a first slurry comprising the ions of at least one PGM and the support material; and
adding the ligand to the slurry.

In other words, any complex that may form between the PGM ions and the ligand is preferably formed *in situ* after a first slurry comprising the PGM ions and the support material has been formed. Using such a method may be very practically advantageous in industry and on a large scale. This is because conventional PGM precursor materials may be used, such as PGM nitrates, for example, later followed by simple addition of the ligand to form the complexes *in situ*, meaning that fewer changes to conventional manufacturing methods (e.g. to the steps in the conventional or currently used manufacturing production lines, for example) may be required to obtain the benefits described herein. That is, one further step of adding the ligand may be added to the production line, without substantially altering any of the other steps in the manufacturing process, for example. In practical terms and in terms of costs, such minimal changes may be advantageous in order to adapt to using the method of the present embodiment. Moreover, it may also save costs, for example, in buying and/or preparing the more expensive and rare PGM complexes described herein, comprising the PGM ions and the ligands described herein, in contrast with the more common PGM nitrate precursors, for example. Advantageously, such a method may also reduce the risk of introducing impurities into the slurry that may be present in a pre-formed complex, whether bought or manufactured "in house" beforehand.

The method preferably further comprises a step prior to disposing the slurry on a substrate of adjusting the pH of the slurry to precipitate a complex of the PGM and the ligand. The pH of the slurry is preferably adjusted to a value of from about 4 to about 6, preferably from about 4.5 to about 5.5, more preferably about 5. Although the method may work without such a pH adjustment step, the method may be substantially improved with such a step as described herein. In particular, it was previously thought that *in situ* production of such a PGM-ligand complex may not be feasible in practice on an industrial scale due to poor kinetics of the reaction. However, the inventors have surprisingly found that when the pH is preferably adjusted as described herein (i.e. preferably maintaining the pH above about 4), substantially more favourable kinetics may be achieved, which may therefore make the method much more favourable for use on an industrial scale, even if the method may still work without such a pH adjustment in general. It has also surprisingly been found that such a pH, i.e. within the same pH range, may be particularly effective for both Pd and Pt, meaning that an even or homogeneous distribution of both the Pt and Pd may be obtained in embodiments when both Pd and Pt are present. That is, both the Pt-ligand complexes and the Pd-ligand complexes may precipitate at similar pHs, meaning that the method may be substantially equally effective for the use of either Pd or Pt, or both together. This may also enable a narrow and comparable particle size distribution of both the Pd and the Pt nanoparticles that may form on the support material. This may help to achieve the beneficial advantages described herein and, in particular, a well-controlled alloy after calcination, for example.

The pH of the slurry prior to pH adjustment is preferably at least 8, more preferably at least 9. This is because the PGM-ligand complexes described herein may be more soluble in water at such pHs. For example, typically, the PGM-ligand complexes described herein may be substantially insoluble in water at neutral (i.e. about 7) or acidic pHs. As such, until the pH is adjusted, such as to reduce the pH, the PGM-ligand complexes may be dissolved. Once the pH is adjusted as described herein, the complexes may then precipitate. Such precipitated complexes may then locate themselves and/or accumulate on the support material, for example.

It should be noted that the method may still work without the precipitation/pH adjustment step. In other words, if a PGM nitrate and the ligand were simply mixed in an acidic pH slurry, for example, the desired reaction (e.g. complexation) may still take place, albeit with slower kinetics. For example, the partially dissolved ligand (e.g. dimethylglyoxime, which may have poor water solubility at low pHs) may react with the PGM nitrate to form a PGM-ligand complex, which may then precipitate in the acidic conditions. However, for manufacturing purposes on a larger scale, it is preferred to include the precipitation step described herein so that the kinetics may be optimized.

The pH of the slurry is preferably adjusted using nitric acid and optionally a base such as ammonia or barium hydroxide in order to obtain the desired pH. Use of a base may be useful for ensuring that the pH is not adjusted to a pH that is too low.

Step b) preferably comprises adding the ligand to the slurry in the form of a powder of the ligand. In other words, a solid form of the ligand is preferably contacted with a pre-formed slurry, in which the PGM ions have been provided by a conventional PGM precursor, such as a PGM nitrate.

The preferred ligands for use in the present aspect are as described herein in relation to the other aspects. In a particularly preferred embodiment, the ligand is dimethylglyoxime. Such a ligand may be particularly suitable for use in the present invention. It will be appreciated, however, that other ligands may be present other than those required by the invention. In particular, in some preferred alternative embodiments, the ligand comprises one or more of glyoxime, a glyoxime derivative, salicylaldimine, and a salicylaldimine derivative. The ligand may preferably comprise a mixture thereof. Preferably, the ligand consists essentially of or consists of one or more of glyoxime, a glyoxime derivative, salicylaldimine, and a salicylaldimine derivative.

The support material preferably comprises an oxygen storage capacity (OSC) material, an inorganic oxide, or a combination thereof. The OSC material preferably comprises cerium oxide, a ceria-zirconia mixed oxide, an alumina-ceria-zirconia mixed oxide, or a combination thereof. The inorganic oxide preferably comprises an inorganic oxide selected from the group consisting of one or more of alumina, magnesia, silica, zirconia, lanthanum, neodymium, praseodymium, yttrium oxides, and mixed oxides or composite oxides thereof, preferably alumina, more preferably gamma-alumina. The slurry preferably comprises a further inorganic oxide selected from the group consisting of alumina, magnesia, silica, zirconia, lanthanum, neodymium, praseodymium, yttrium oxides, and mixed oxides or composite oxides thereof. The further inorganic oxide preferably comprises alumina, more preferably gamma-alumina.

The OSC material and/or (further) inorganic oxide is preferably doped. The OSC material and/or (further) inorganic oxide is preferably doped with an oxide of one or more of lanthanum, neodymium, yttrium, niobium, praseodymium, hafnium, molybdenum, titanium, vanadium, zinc, cadmium, manganese, iron, copper, calcium, barium, strontium, caesium, magnesium, potassium and sodium, more preferably one or more of lanthanum, neodymium, praseodymium and yttrium, even more preferably lanthanum. Lanthanum-doped alumina is particularly preferred as a further inorganic oxide.

The dopant is preferably present in the OSC material and/or (further) inorganic oxide in an amount of from 0.001 wt.% to 20 wt.%, preferably from 0.5 wt.% to 10 wt.%.

The slurry preferably further comprises an alkaline earth metal. The alkaline earth metal may be included as a promoter, for example. The alkaline earth metal is preferably barium, or strontium, and mixed oxides or composite oxides thereof. The alkaline earth metal is preferably present as carbonate or sulfate. In other words, an alkaline earth metal carbonate or sulfate is preferably added to the slurry. The alkaline earth metal is preferably present as sulfate. The alkaline earth metal is preferably barium. Other promoters may include, for example, a non-PGM transition metal element, a rare earth element, an alkali or alkaline earth group element, and/or a combination of two or more of the above elements within the same or different groups in periodic table. The promoter may be a salt of such elements. A particularly preferred promoter is barium, with particularly preferred salts thereof being barium acetate, barium citrate and barium sulfate, or a combination thereof, more preferably barium citrate.

In other words, for the *in situ* embodiment step a) preferably comprises providing a first slurry comprising the ions of at least one PGM, the support material and a carbonate or sulfate of an alkaline earth metal.

Prior to the step of adjusting the pH of the slurry to precipitate a complex of the PGM and the ligand, if present, a base, preferably barium hydroxide, is preferably added to the slurry. The addition of such a base may help to ensure that any PGM-ligand complex that may have formed is well dissolved within the slurry. This may help to achieve even or homogeneous distribution of the PGM-ligand complex within the slurry, and therefore in and/or on the resulting loaded support material. The base may be added before or after the addition of the ligand in the *in situ* embodiment.

Step a) preferably comprises contacting an aqueous solution comprising ions of at least one PGM with a support material and/or contacting a salt of the at least one PGM with a second slurry comprising the support material, preferably wherein the second slurry is a water-based slurry. In other words, the solvent of the slurry is preferably water. The salt of the at least one PGM preferably comprises a PGM nitrate.

The slurry preferably further comprises one or more of a binder and a thickening agent. Binders may include, for example, an oxide material with small particle size to bind the individual insoluble particles together in washcoat slurry. The use of binders in washcoats is well known in the art. Thickening agents may include, for example, a natural polymer with functional hydroxyl groups that interacts with insoluble particles in washcoat slurry. It serves the purpose of thickening washcoat slurry for the improvement of coating profile during washcoat coating onto substrate. It is usually burned off during washcoat calcination. Examples of specific thickening agents / rheology modifiers for washcoats include glactomanna gum, guar gum, xanthan gum, curdlan schizophyllan, scleroglucan, diutan gum, Whelan gum, hydroxymethyl cellulose, carboxymethyl cellulose, hydroxyethyl cellulose, methyl cellulose, methyl hydroxyethyl cellulose, methyl hydroxypropyl cellulose and ethyl hydroxy cellulose.

The slurry preferably has a solids content of from 10 to 40 %, preferably from 15 to 35 %. Such a solids content may enable slurry rheologies suitable for disposing the loaded support material onto the substrate. For example, if the substrate is a honeycomb monolith, such solid contents may enable the deposition of a thin layer of washcoat onto the inner walls of the substrate. If the substrate is a wall flow filter, such solids contents may enable the slurry to enter the channels of the wall flow filter and may enable the slurry to enter the walls of the wall flow filter.

Disposing the slurry on a substrate preferably comprises contacting the slurry with the substrate and optionally: applying a vacuum to the substrate, and/or drying the slurry on the substrate. This may result in a favourable distribution of the loaded support material that may be contained in the slurry on the substrate. The drying preferably occurs: at a temperature of from 60 °C to 200 °C, more preferably from 70 °C to 130 °C; and/or for from 10 to 360 minutes, preferably from 15 to 60 minutes.

The substrate preferably comprises cordierite. The substrate may be in the form of a honeycomb monolith, a wall flow filter or a flow through filter. The substrate may be a "blank", *i.e.* un-washcoated, substrate. Alternatively, the substrate may have one or washcoats already loaded thereon. In such a situation, the final catalyst article may comprise multiple layers of different washcoats.

The heating is preferably carried out: at a temperature of from 400 °C to 700 °C, preferably from 400 °C to 600 °C, more preferably from 450 °C to 600 °C; and/or for from 10 to 360 minutes, preferably from 35 to 120 minutes. The heating preferably comprises calcining.

The palladium nanoparticles preferably have a mean particle size of from 0.1 nm to 25 nm, preferably from 5 to 20 nm. The mean particle size may be measured by TEM. Unless otherwise described herein, any mean particle size described herein may be measured by TEM. Such particle sizes may advantageously enable the favourable properties discussed above, such as high activity and resistance to deactivity on ageing.

In a further aspect, the present invention provides a catalyst article obtained or obtainable by a method of any aspect described herein, the catalyst article being for use in an emission treatment system. The catalyst article is preferably according to the catalyst article aspect described herein. The catalyst article is preferably for three-way catalysis.

In a further aspect, the present invention provides an emission treatment system comprising the catalyst article described herein.

The emission treatment system is preferably for a gasoline engine.

The gasoline engine preferably operates under stoichiometric conditions.

In a further aspect, the present invention provides a method of treating an exhaust gas, the method comprising: providing the catalyst article described herein; and contacting the catalyst article with an exhaust gas.

The exhaust gas is preferably from a gasoline engine. The catalyst article is particularly suitable for treating such exhaust gas. Moreover, exhaust from a gasoline engine is typically harsher than that from a diesel engine, such as a higher temperature. Therefore, the advantageous ageing properties of the catalyst articles described herein are particularly beneficial therefor. The gasoline engine preferably operates under stoichiometric conditions.

### DEFINTIONS

The term "region" as used herein refers to an area on a substrate, typically obtained by drying and/or calcining a washcoat. A "region" can, for example, be disposed or supported on a substrate as a "layer" or a "zone". The area or arrangement on a substrate is generally controlled during the process of applying the washcoat to the substrate. The "region" typically has distinct boundaries or edges (i.e. it is possible to distinguish one region from another region using conventional analytical techniques).

Typically, the "region" has a substantially uniform length. The reference to a "substantially uniform length" in this context refers to a length that does not deviate (e.g. the difference between the maximum and minimum length) by more than 10 %, preferably does not deviate by more than 5 %, more preferably does not deviate by more than 1 %, from its mean value.

It is preferable that each "region" has a substantially uniform composition (i.e. there is no substantial difference in the composition of the washcoat when comparing one part of the region with another part of that region). Substantially uniform composition in this context refers to a material (*e*.*g*., region) where the difference in composition when comparing one part of the region with another part of the region is 5% or less, usually 2.5% or less, and most commonly 1% or less.

The term "zone" as used herein refers to a region having a length that is less than the total length of the substrate, such as ≤ 75 % of the total length of the substrate. A "zone" typically has a length (*i.e.* a substantially uniform length) of at least 5% (*e.g.* ≥ 5 %) of the total length of the substrate.

The total length of a substrate is the distance between its inlet end and its outlet end (*e.g.* the opposing ends of the substrate).

Any reference to a "zone disposed at an inlet end of the substrate" used herein refers to a zone disposed or supported on a substrate where the zone is nearer to an inlet end of the substrate than the zone is to an outlet end of the substrate. Thus, the midpoint of the zone (i.e. at half its length) is nearer to the inlet end of the substrate than the midpoint is to the outlet end of the substrate. Similarly, any reference to a "zone disposed at an outlet end of the substrate" used herein refers to a zone disposed or supported on a substrate where the zone is nearer to an outlet end of the substrate than the zone is to an inlet end of the substrate. Thus, the midpoint of the zone (i.e. at half its length) is nearer to the outlet end of the substrate than the midpoint is to the inlet end of the substrate.

When the substrate is a wall-flow filter, then generally any reference to a "zone disposed at an inlet end of the substrate" refers to a zone disposed or supported on the substrate that is:
(a) nearer to an inlet end (e.g. open end) of an inlet channel of the substrate than the zone is to a closed end (e.g. blocked or plugged end) of the inlet channel, and/or
(b) nearer to a closed end (e.g. blocked or plugged end) of an outlet channel of the substrate than the zone is to an outlet end (e.g. open end) of the outlet channel.

Thus, the midpoint of the zone (i.e. at half its length) is (a) nearer to an inlet end of an inlet channel of the substrate than the midpoint is to the closed end of the inlet channel, and/or (b) nearer to a closed end of an outlet channel of the substrate than the midpoint is to an outlet end of the outlet channel.

Similarly, any reference to a "zone disposed at an outlet end of the substrate" when the substrate is a wall-flow filter refers to a zone disposed or supported on the substrate that is:
(a) nearer to an outlet end (e.g. an open end) of an outlet channel of the substrate than the zone is to a closed end (e.g. blocked or plugged) of the outlet channel, and/or
(b) nearer to a closed end (e.g. blocked or plugged end) of an inlet channel of the substrate than it is to an inlet end (e.g. an open end) of the inlet channel.

Thus, the midpoint of the zone (i.e. at half its length) is (a) nearer to an outlet end of an outlet channel of the substrate than the midpoint is to the closed end of the outlet channel, and/or (b) nearer to a closed end of an inlet channel of the substrate than the midpoint is to an inlet end of the inlet channel.

A zone may satisfy both (a) and (b) when the washcoat is present in the wall of the wall-flow filter (i.e. the zone is in-wall).

The term "washcoat" is well known in the art and refers to an adherent coating that is applied to a substrate usually during production of a catalyst.

The acronym "PGM" as used herein refers to "platinum group metal". The term "platinum group metal" generally refers to a metal selected from the group consisting of Ru, Rh, Pd, Os, Ir and Pt, preferably a metal selected from the group consisting of Ru, Rh, Pd, Ir and Pt. In general, the term "PGM" preferably refers to a metal selected from the group consisting of Rh, Pt and Pd.

The term "mixed oxide" as used herein generally refers to a mixture of oxides in a single phase, as is conventionally known in the art. The term "composite oxide" as used herein generally refers to a composition of oxides having more than one phase, as is conventionally known in the art.

The expression "consist essentially" as used herein limits the scope of a feature to include the specified materials or steps, and any other materials or steps that do not materially affect the basic characteristics of that feature, such as for example minor impurities. The expression "consist essentially of" embraces the expression "consisting of".

By "slurry", we mean a liquid comprising insoluble matter e.g. insoluble particles.

Any reference to an amount of dopant, particularly a total amount, expressed as a % by weight as used herein refers to the weight of the support material or the refractory metal oxide thereof.

The term "loading" as used herein refers to a measurement in units of g/ft³ on a metal weight basis.

Where the present specification refers to "a" or "an", this encompasses the singular and plural forms.

The following examples merely illustrate the invention. Those skilled in the art will recognize many variations that are within the spirit of the invention and scope of the claims.

### EXAMPLES

### General Synthesis Procedure to make washcoat containing Pd PGM precursor

Pd DMG aqueous solution (basic pH) was added to a washcoat slurry (mixture of CeZr mixed oxide and alumina components with water) and then pH was adjusted from basic to acidic to precipitate Pd DMG in the slurry. Ba promotor was then added into the slurry. The washcoat slurry was coated on a bare substrate or catalyst-coated substrate which was calcined at 500 °C using Johnson Matthey's "Precision Coating" technology according to US 6,599,570. The coated catalyst was dried at 120 °C and then calcined at 500 °C in a static oven under atmosphere condition.

### EXAMPLE 1: PD DISPERSION AND LOCATION CHARACTERIZATION

### Comparative Catalyst A:

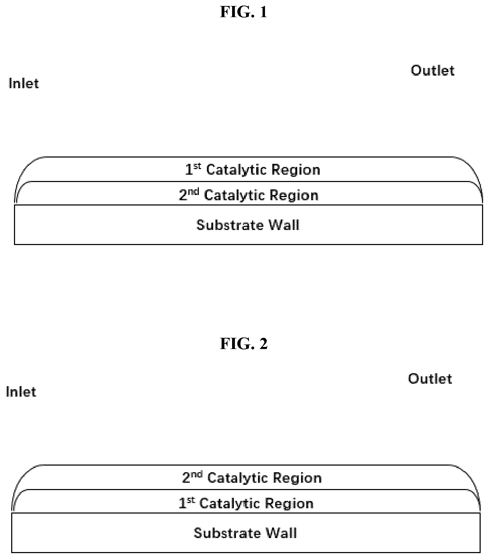

Comparative Catalyst A is a double-layered TWC comprising a first catalyst region in top layer and a second catalyst region in bottom layer (*e.g*., *see* **FIG. 1**), coated on a ceramic substrate (600 cpsi, 3.0 mil wall thickness).

### First Catalytic Region:

The first catalytic region consists of Pd supported on a washcoat of CeZr mixed oxide, La-stabilized alumina, and Ba carbonate, using Pd nitrate precursor. The washcoat loading of the first catalytic region was about 2.0 g/in³ with a Pd loading of 86 g/ft³ and 5.8 wt.% Ba (calculated as BaO).

### Second Catalytic Region:

The second catalytic region consists of Rh supported on a washcoat of CeZr mixed oxide, and La-stabilized alumina. The washcoat loading of the second catalytic region was about 2.0 g/in³ with a Rh loading of 14 g/ft³.

### Catalyst B:

Catalyst B is a double-layered TWC comprising a first catalyst region in top layer and a second catalyst region in bottom layer (*e.g*., *see* **FIG. 1**), coated on a ceramic substrate (600 cpsi, 3.0 mil wall thickness).

### First Catalytic Region:

The first catalytic region consists of Pd supported on a washcoat of CeZr mixed oxide, La-stabilized alumina, and Ba carbonate, using Pd DMG precursor. The washcoat loading of the first catalytic region was about 2.0 g/in³ with a Pd loading of 86 g/ft³ and 5.8 wt.% Ba (calculated as BaO).

### Second Catalytic Region:

The second catalytic region consists of Rh supported on a washcoat of CeZr mixed oxide, and La-stabilized alumina. The washcoat loading of the second catalytic region was about 2.0 g/in³ with a Rh loading of 14 g/ft³.

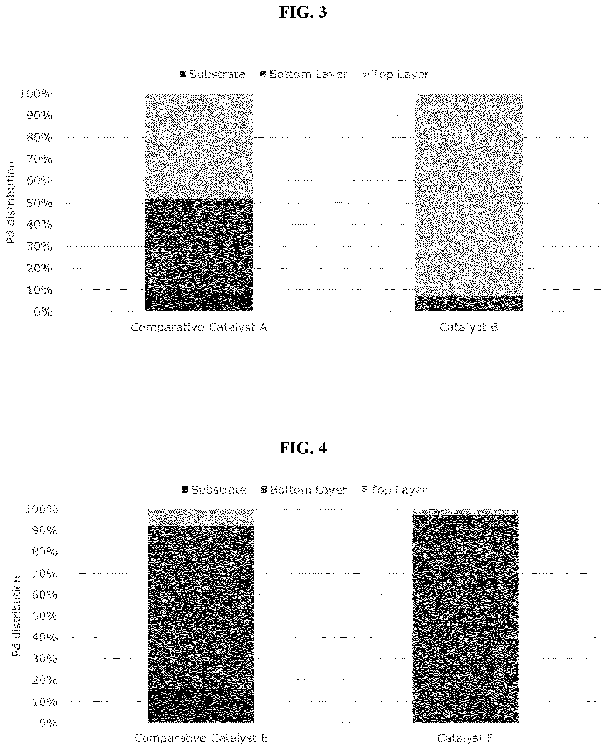

Pd distribution in the substrate, first catalyst region (bottom layer), and the second catalyst region (top layer) of Catalyst B and Comparative Catalyst A was evaluated separately by Electron Probe Micro Analyzer (EPMA). As shown in **FIG. 3**, the migration of Pd from top layer to bottom layer and substrate is significantly suppressed for Catalyst B with Pd DMG precursor as respect to Comparative Catalyst A with water soluble Pd nitrate precursor.

Pd dispersion of Catalyst B and Comparative Catalyst A was tested separately by CO-pulse chemisorption measurements at 50 °C. The catalysts were pre-treated with H₂ gas for 10mins at 300 °C prior to CO pulse. A 1: 1 ratio of CO:Pd was used to estimate the dispersion. Before CO-pulse chemisorption tests, Catalyst B and Comparative Catalyst A were hydrothermal aged for 4 hours under redox condition in a 5 L/min flow of repeated reducing/oxidizing cycle with the gasses listed in **Table 1** at 1050 °C.

**Table 1**

| Condition | CO (%) | H₂ (%) | O₂ (%) | H₂O (%) | N₂ | Duration |
|---|---|---|---|---|---|---|
| Reducing | 3 | 3 | 0 | 10 | balance | 3 min |
| Oxidizing | 0 | 0 | 3 | 10 | balance | 3 min |

Pd dispersion results are shown in **Table 2**. The data demonstrate that more than 30% improvement of Pd dispersion for Catalyst B against Comparative Catalyst A after hydrothermal ageing.

**Table 2: Pd Dispersion Results**

| | Pd dispersion (%) |
|---|---|
| Catalyst B | 0.90 |
| Comparative Catalyst A | 0.68 |

### EXAMPLE 2: LIGHT OFF PERFORMANCES IN SYNTHETIC CATALYST ACTIVITY TEST

Catalyst B and Comparative Catalyst A were tested separately over a Synthetic Catalyst Activity Test (SCAT) device. The light off performance was tested in a gas flow of 10 vol.% H₂O + 14 vol.% CO₂ + 1260ppm C₃H₆ + 0.6 vol.% CO + 0.6 vol.% O₂ + 1000ppm NO balanced with N₂ (the space velocity was 60000 h⁻¹), and temperature ramp is 30 °C/min. The conversion of THC, CO and NOₓ were calculated from comparing the concentration of the feed gas and the gas at the outlets of the catalysts. Comparative Catalyst A and Catalyst B were hydrothermal aged for 4 hours at 1050 °C under redox condition of **Table 1.**

The HC, CO and NOₓ T₅₀ light off temperatures of aged Catalyst B and Comparative Catalyst A are shown in **Table 3**. The data indicate that, surprisingly, Catalyst B of the present invention gave significantly improved light-off performance when compared with Comparative Catalyst A, with about 17 °C, 17 °C and 5 °C lower T₅₀ (T₅₀ is the temperature when the conversion reaching 50%) for CO, HC and NOₓ, respectively.

**Table 3: SCAT Light Off Test Results**

| | T₅₀ (°C) | | |
|---|---|---|---|
| | CO | HC | NOₓ |
| Comparative Catalyst A | 252 | 277 | 229 |
| Catalyst B | 235 | 260 | 224 |

### EXAMPLE 3: EMISSION CONTROL PERFROMANCE IN GASOLINE PASSENGER VEHICLE

### Comparative Catalyst C:

Comparative Catalyst C is a double-layered TWC comprising a first catalyst region in top layer and a second catalyst region in bottom layer (*e.g*., *see* **FIG. 1**), coated on a ceramic substrate (750 cpsi, 3.0 mil wall thickness).

### First Catalytic Region:

The first catalytic region consists of Pd supported on a washcoat of CeZr mixed oxide, La-stabilized alumina, and Ba carbonate, using Pd nitrate precursor. The washcoat loading of the first catalytic region was about 1.5 g/in³ with a Pd loading of 100 g/ft³ and 8.2 wt.% Ba (calculated as BaO).

### Second Catalytic Region:

The second catalytic region consists of Rh supported on a washcoat of CeZr mixed oxide, and La-stabilized alumina. The washcoat loading of the second catalytic region was about 1.5 g/in³ with a Rh loading of 16 g/ft³.

### Catalyst D:

Catalyst D is a double-layered TWC comprising a first catalyst region in top layer and a second catalyst region in bottom layer (*e.g*., *see* **FIG. 1**), coated on a ceramic substrate (750 cpsi, 3.0 mil wall thickness).

### First Catalytic Region:

The first catalytic region consists of Pd supported on a washcoat of CeZr mixed oxide, La-stabilized alumina, and Ba carbonate, using Pd DMG precursor. The washcoat loading of the first catalytic region was about 1.5 g/in³ with a Pd loading of 100 g/ft³ and 8.2 wt.% Ba (calculated as BaO).

### Second Catalytic Region:

The second catalytic region consists of Rh supported on a washcoat of CeZr mixed oxide, and La-stabilized alumina. The washcoat loading of the second catalytic region was about 1.5 g/in³ with a Rh loading of 16 g/ft³.

Catalyst D and Comparative Catalyst C were bench aged for 200 hours with fuel cut aging cycles, with peak temperature at 960 °C. vehicle emissions were conducted over a commercial vehicle with 2.5 litre engine. Emissions were measured pre- and post-catalyst.

**Table 4: Catalysts Performance by Bag Emission Analysis**

| | Tailpipe Emissions (g) | | |
|---|---|---|---|
| | HC | CO / 10 | NOₓ |
| Comparative Catalyst C | 0.161 | 0.842 | 0.347 |
| Catalyst D | 0.068 | 0.711 | 0.279 |

As shown in **Table 4**, Catalyst D showed significant reduction of emission of HC, CO, and NOₓ in comparison with Comparative Catalyst C (58%, 16%, and 20% reduction respectively).

### EXAMPLE 4: LIGHT OFF AND EMISSION CONTROL PERFROMANCE IN GASOLINE PASSENGER VEHICLE

### Comparative Catalyst E

Comparative Catalyst E is a double-layered TWC comprising a first catalyst region in bottom layer and a second catalyst region in top layer (*e.g., see* **FIG. 2**), coated on a ceramic substrate (600 cpsi, 3.5 mil wall thickness).

### First Catalytic Region:

The first catalytic region consists of Pd supported on a washcoat of CeZr mixed oxide, La-stabilized alumina, and Sr carbonate, using Pd nitrate precursor. The washcoat loading of the first catalytic region was about 1.5 g/in³ with a Pd loading of 90 g/ft³ and 6.4 wt.% Sr (calculated as SrO).

### Second Catalytic Region:

The second catalytic region consists of Rh supported on a washcoat of CeZr mixed oxide, and La-stabilized alumina. The washcoat loading of the second catalytic region was about 1.0 g/in³ with a Rh loading of 8 g/ft³.

### Catalyst F

Catalyst F is a double-layered TWC comprising a first catalyst region in bottom layer and a second catalyst region in top layer (*e.g*., *see* **FIG. 2**), coated on a ceramic substrate (600 cpsi, 3.5 mil wall thickness).

### First Catalytic Region:

The first catalytic region consists of Pd supported on a washcoat of CeZr mixed oxide, La-stabilized alumina, and Sr carbonate, using Pd DMG precursor. The washcoat loading of the first catalytic region was about 1.5 g/in³ with a Pd loading of 90 g/ft³ and 6.4 wt.% Sr (calculated as SrO).

### Second Catalytic Region:

The second catalytic region consists of Rh supported on a washcoat of CeZr mixed oxide, and La-stabilized alumina. The washcoat loading of the second catalytic region was about 1.0 g/in³ with a Rh loading of 8 g/ft³.

Pd distribution in the substrate, the first catalyst region (bottom layer), and the second catalyst region (top layer) of Catalyst F and Comparative Catalyst E was evaluated separately by Electron Probe Micro Analyzer (EPMA). As shown in **FIG. 4**, the migration of Pd from bottom layer to top layer and substrate is significantly suppressed for Catalyst F with Pd DMG precursor as respect to Comparative Catalyst E with water soluble Pd nitrate precursor.

Catalyst F and Comparative Catalyst E were bench aged for 50 hours with fuel cut aging cycles, with peak temperature at 950 °C. The light off performance of the aged catalysts was tested using gasoline engine bench, and the HC, CO and NOₓ T₅₀ light off temperatures are shown in **Table 5**. Catalyst F of the present invention gave significantly improved light-off performance when compared with Comparative Catalyst E, with about 9 °C, 7 °C, and 7 °C lower T₅₀ for CO, HC and NOₓ, respectively.

**Table 5: Engine Bench Light Off OSC Test Results**

| | T₅₀ (°C) | | |
|---|---|---|---|
| | CO | HC | NOₓ |
| Comparative Catalyst E | 261 | 262 | 258 |
| Catalyst F | 252 | 255 | 251 |

The vehicle emissions were further conducted over a commercial vehicle with 1.5 litre engine. Emissions were measured pre- and post-catalyst.

**Table 6: Catalysts Performance by Bag Emission Analysis**

| | Weighted Tailpipe Emissions (g/km) | | |
|---|---|---|---|
| | NMHC | CO/10 | NOₓ |
| Comparative Catalyst E | 0.014 | 0.604 | 0.015 |
| Catalyst F | 0.013 | 0.587 | 0.013 |

As shown in **Table 6**, Catalyst F showed reduction of emission of HC, CO, and NOx in comparison with Comparative Catalyst E (7%, 3%, and 13% reduction respectively).

### EXAMPLE 5: LIGHT OFF AND EMISSION CONTROL PERFROMANCE IN GASOLINE PASSENGER VEHICLE

### Comparative Catalyst G

Comparative Catalyst G is a double-layered TWC comprising a first catalyst region in top layer and a second catalyst region in bottom layer (*e.g*., *see* **FIG. 1**), coated on a ceramic substrate (750 cpsi, 3.0 mil wall thickness).

### First Catalytic Region:

The first catalytic region consists of Pd supported on a washcoat of CeZr mixed oxide, La-stabilized alumina, and Ba sulfate, using Pd nitrate precursor. The washcoat loading of the first catalytic region was about 1.6 g/in³ with a Pd loading of 28 g/ft³ and 6.2 wt.% Ba (calculated as BaO).

### Second Catalytic Region:

The second catalytic region consists of Rh supported on a washcoat of CeZr mixed oxide, and La-stabilized alumina. The washcoat loading of the second catalytic region was about 1.4 g/in³ with a Rh loading of 6 g/ft³.

### Catalyst H

Catalyst H is a double-layered TWC comprising a first catalyst region in top layer and a second catalyst region in bottom layer (*e.g*., *see* **FIG. 1**), coated on a ceramic substrate (750 cpsi, 3.0 mil wall thickness).

### First Catalytic Region:

The first catalytic region consists of Pd supported on a washcoat of CeZr mixed oxide, La-stabilized alumina, and Ba sulfate, using Pd DMG precursor. The washcoat loading of the first catalytic region was about 1.6 g/in³ with a Pd loading of 28 g/ft³ and 6.2 wt.% Ba (calculated as BaO).

### Second Catalytic Region:

The second catalytic region consists of Rh supported on a washcoat of CeZr mixed oxide, and La-stabilized alumina. The washcoat loading of the second catalytic region was about 1.4 g/in³ with a Rh loading of 6 g/ft³.

Catalyst H and Comparative Catalyst G were bench aged for 200 hours with fuel cut aging cycles, with peak temperature at 960 °C. The light off performance of the aged catalysts was tested using gasoline engine bench, and the CO, HC and NOₓ T₅₀ light off temperatures are shown in **Table 7**. Catalyst H of the present invention gave significantly improved light-off performance when compared with Comparative Catalyst G, with about 21 °C, 20 °C, and 22 °C lower T₅₀ for CO, HC and NOₓ, respectively.

**Table 7: Engine Bench Light Off OSC Test Results**

| | T₅₀ (°C) | | |
|---|---|---|---|
| | CO | HC | NOₓ |
| Comparative Catalyst G | 429 | 431 | 430 |
| Catalyst H | 408 | 411 | 408 |

The vehicle emissions were further conducted over a commercial vehicle with 2.5 litre engine. Emissions were measured pre- and post-catalyst.

**Table 8: Catalysts Performance by Bag Emission Analysis**

| | Bag Emissions (g) | | |
|---|---|---|---|
| | HC | CO / 10 | NOₓ |
| Comparative Catalyst G | 0.680 | 2.769 | 0.395 |
| Catalyst H | 0.653 | 2.394 | 0.371 |

As shown in **Table 8**, Catalyst H showed reduction of emission of HC, CO, and NOₓ in comparison with Comparative Catalyst G (4%, 14%, and 6% reduction respectively).

### EXAMPLE 6: EMISSION CONTROL PERFROMANCE IN GASOLINE PASSENGER VEHICLE

### Catalyst I

Catalyst I is a double-layered TWC comprising a first catalyst region in top layer and a second catalyst region in bottom layer (*e.g*., *see* **FIG. 1**), coated on a ceramic substrate (750 cpsi, 3.0 mil wall thickness).

### First Catalytic Region:

The first catalytic region consists of Pd supported on a washcoat of CeZr mixed oxide, La-stabilized alumina, and Ba carbonate, using Pd DMG precursor. The washcoat loading of the first catalytic region was about 1.6 g/in³ with a Pd loading of 154 g/ft³ and 6.0 wt.% Ba (calculated as BaO).

### Second Catalytic Region:

The second catalytic region consists of Rh supported on a washcoat of CeZr mixed oxide, and La-stabilized alumina. The washcoat loading of the second catalytic region was about 1.4 g/in³ with a Rh loading of 15 g/ft³.

### Catalyst J

Catalyst J is a double-layered TWC comprising a first catalyst region in top layer and a second catalyst region in bottom layer (*e.g*., *see* **FIG. 1**), coated on a ceramic substrate (750 cpsi, 3.0 mil wall thickness).

### First Catalytic Region:

The first catalytic region consists of Pd supported on a washcoat of CeZr mixed oxide, La-stabilized alumina, and Ba sulfate, using Pd DMG precursor. The washcoat loading of the first catalytic region was about 1.6 g/in³ with a Pd loading of 28 g/ft³ and 5.9 wt.% Ba (calculated as BaO).

### Second Catalytic Region:

The second catalytic region consists of Rh supported on a washcoat of CeZr mixed oxide, and La-stabilized alumina. The washcoat loading of the second catalytic region was about 1.4 g/in³ with a Rh loading of 6 g/ft³.

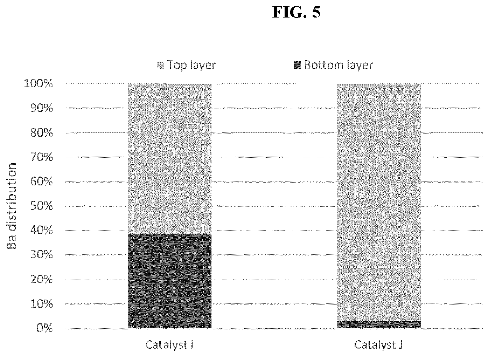

Ba distribution in the first catalyst region (top layer), and the second catalyst region (bottom layer) of Catalyst I and Catalyst J was evaluated separately by Electron Probe Micro Analyzer (EPMA). As shown in **FIG. 5**, the migration of Ba from top layer to bottom layer is significantly suppressed for Catalyst J with BaSO₄ as respect to Catalyst I with water soluble Ba(OH)₂.

Catalyst I and Catalyst J were bench aged for 200 hours with fuel cut aging cycles, with peak temperature at 960 °C. vehicle emissions were conducted over a commercial vehicle with 2.5 litre engine. Emissions were measured pre- and post-catalyst.

**Table 9: Catalysts Performance by Bag Emission Analysis**

| | Weighted Bag Emissions (g/mile) | | |
|---|---|---|---|
| | NMHC | CO /10 | NOₓ |
| Catalyst I | 0.010 | 0.120 | 0.014 |
| Catalyst J | 0.009 | 0.109 | 0.012 |

As shown in **Table 9**, Catalyst J showed reduction of emission of NMHC, CO, and NOₓ in comparison with Catalyst I (8%, 9%, and 15% reduction respectively).

### EXAMPLE 7: EMISSION CONTROL PERFROMANCE IN GASOLINE PASSENGER VEHICLE

### Catalyst K (Pd DMG in bottom layer with 100 g/ft³ Pd loading)

Catalyst K is a double-layered TWC comprising a first catalyst region in bottom layer and a second catalyst region in top layer (*e.g*., *see* **FIG. 2**), coated on a ceramic substrate (600 cpsi, 4.3 mil wall thickness).

### First Catalytic Region:

The first catalytic region consists of Pd supported on a washcoat of CeZr mixed oxide, La-stabilized alumina, and Ba carbonate, using Pd DMG precursor. The washcoat loading of the first catalytic region was about 2.0 g/in³ with a Pd loading of 100 g/ft³ and 8.6 wt.% Ba (calculated as BaO).

### Second Catalytic Region:

The second catalytic region consists of Rh supported on a washcoat of CeZr mixed oxide, and La-stabilized alumina. The washcoat loading of the second catalytic region was about 2.0 g/in³ with a Rh loading of 4 g/ft³.

### Catalyst L (in situ Pd DMG in bottom layer with 100 g/ft³ Pd loading)

Catalyst L is a double-layered TWC comprising a first catalyst region in bottom layer and a second catalyst region in top layer (*e.g*., *see* **FIG. 2**), coated on a ceramic substrate (600 cpsi, 4.3 mil wall thickness).

### First Catalytic Region:

The first catalytic region consists of Pd supported on a washcoat of CeZr mixed oxide, La-stabilized alumina, and Ba carbonate, using Pd DMG precursor which was synthesized via direct reaction between Pd nitrate and DMG molecule as follows. The Pd nitrate solution (100 g/ft³ as Pd) was added into a mixed slurry of the mixed oxide and alumina, and DMG powder (220 g/ft³) was then added into the slurry. The formation of Pd DMG was identified by infrared spectroscopy (i.e. same IR absorption signals compared to original Pd DMG). Ba(OH)₂ was subsequently added into the slurry and the pH was adjusted using nitric acid to be about 5. The washcoat loading of the first catalytic region was about 2.0 g/in³ with a Pd loading of 100 g/ft³ and 8.6 wt.% Ba (calculated as BaO).

### Second Catalytic Region:

The second catalytic region consists of Rh supported on a washcoat of CeZr mixed oxide, and La-stabilized alumina. The washcoat loading of the second catalytic region was about 2.0 g/in³ with a Rh loading of 4 g/ft³.

Catalyst K and Catalyst L were bench aged for 50 hours with fuel cut aging cycles, with peak temperature at 950 °C. The vehicle emissions were further conducted over a commercial vehicle with 1.5 litre engine. Emissions were measured pre- and post-catalyst.

**Table 10: Catalysts Performance by Bag Emission Analysis**

| | Weighted Tailpipe Emissions (g/km) | | |
|---|---|---|---|
| | THC | CO/10 | NOₓ |
| Catalyst K | 0.058 | 0.055 | 0.093 |
| Catalyst L | 0.056 | 0.046 | 0.071 |

As shown in **Table 10**, Catalyst L showed reduction of emission of THC, CO, and NOx in comparison with Catalyst K (3%, 16%, and 23% reduction respectively). The in-situ synthesis of Pd DMG in the washcoat slurry provides further improvement of TWC performance.

### EXAMPLE 8: EMISSION CONTROL PERFROMANCE IN GASOLINE PASSENGER VEHICLE

### Comparative Catalyst M (Pd-Pt nitrate in bottom layer with 50 g/ft³ Pd and 50 g/ft³ Pt)

Comparative Catalyst M is a double-layered TWC comprising a first catalyst region in bottom layer and a second catalyst region in top layer (*e.g*., *see* **FIG. 2**), coated on a ceramic substrate (600 cpsi, 4.3 mil wall thickness).

### First Catalytic Region:

The first catalytic region consists of Pd and Pt supported on a washcoat of CeZr mixed oxide, La-stabilized alumina, and Ba carbonate, using Pd nitrate and Pt nitrate precursors. The washcoat loading of the first catalytic region was about 2.0 g/in³ with a Pd loading of 50 g/ft³, Pt loading of 50 g/ft³ and 8.6 wt.% Ba (calculated as BaO).

### Second Catalytic Region:

The second catalytic region consists of Rh supported on a washcoat of CeZr mixed oxide, and La-stabilized alumina. The washcoat loading of the second catalytic region was about 2.0 g/in³ with a Rh loading of 4 g/ft³.

### Catalyst N (Pd-Pt DMG in bottom layer with 50 g/ft³ Pd and 50 g/ft³ Pt)

Catalyst N is a double-layered TWC comprising a first catalyst region in bottom layer and a second catalyst region in top layer (*e.g*., *see* **FIG. 2**), coated on a ceramic substrate (600 cpsi, 4.3 mil wall thickness).

### First Catalytic Region:

The first catalytic region consists of Pd and Pt supported on a washcoat of CeZr mixed oxide, La-stabilized alumina, and Ba carbonate, using Pd DMG and Pt DMG precursors. The washcoat loading of the first catalytic region was about 2.0 g/in³ with a Pd loading of 50 g/ft³, Pt loading of 50 g/ft³ and 8.6 wt.% Ba (calculated as BaO).

### Second Catalytic Region:

The second catalytic region consists of Rh supported on a washcoat of CeZr mixed oxide, and La-stabilized alumina. The washcoat loading of the second catalytic region was about 2.0 g/in³ with a Rh loading of 4 g/ft³.

Comparative Catalyst M and Catalyst N were bench aged for 50 hours with fuel cut aging cycles, with peak temperature at 950 °C. The vehicle emissions were further conducted over a commercial vehicle with 1.5 litre engine. Emissions were measured pre- and post-catalyst.

**Table 11: Catalysts Performance by Bag Emission Analysis**

| | Weighted Tailpipe Emissions (g/km) | | |
|---|---|---|---|
| | THC | CO/10 | NOₓ |
| Comparative Catalyst M | 0.065 | 0.054 | 0.081 |
| Catalyst N | 0.063 | 0.048 | 0.055 |

As shown in **Table 11**, Catalyst N showed emission reduction of THC, CO, and NOₓ in comparison with Comparative Catalyst M (3%, 11%, and 32% reduction respectively).

### EXAMPLE 9: LIGHT OFF PERFORMANCES IN SYNTHETIC CATALYST ACTIVITY TEST

### Catalyst O (Pd-Pt DMG in single layered TWC)

Catalyst O is a single-layered TWC coated on a ceramic substrate (400 cpsi, 4 mil wall thickness). The catalyst consists of Pd and Pt supported on a washcoat of CeZr mixed oxide, La-stabilized alumina, and Ba carbonate, using Pd DMG and Pt DMG precursors. The washcoat loading of the first catalytic region was about 2.0 g/in³ with a Pd loading of 50 g/ft³, Pt loading of 50 g/ft³ and 8.6 wt.% Ba (calculated as BaO).

### Catalyst P (in situ Pd-Pt DMG in single layered TWC)

Catalyst P is a single-layered TWC coated on a ceramic substrate (400 cpsi, 4 mil wall thickness). The catalyst consists of Pd and Pt supported on a washcoat of CeZr mixed oxide, La-stabilized alumina, and Ba carbonate, using Pd and Pt DMG precursors that were synthesized in the washcoat slurry via direct reaction of Pd/Pt nitrate with DMG molecule. Mixed solution of Pd nitrate (50 g/ft³ as Pd) and Pt nitrate (50 g/ft³ ad Pt) was added into mixed slurry of the mixed oxide and alumina. Ba(OH)₂ was then added into the slurry to be pH of more than 6. DMG powder (220 g/ft³) was subsequently added into the slurry and the pH was finally adjusted by nitric acid to be about 5. The formation of Pd/Pt DMG was identified by infrared spectroscopy (i.e. same IR absorption signals compared to original Pd/Pt DMG). The washcoat loading of the first catalytic region was about 2.0 g/in³ with a Pd loading of 50 g/ft³, Pt loading of 50 g/ft³ and 8.6 wt.% Ba (calculated as BaO).

Catalyst O and Catalyst P were tested separately over a SCAT device. The light off performance was tested in a gas flow of 10 vol.% H₂O + 14 vol.% CO₂+ 1260ppm C₃H₆ + 0.6 vol.% CO + 0.6 vol.% O₂ + 1000ppm NO balanced with N₂ (the space velocity was 60000 h⁻¹), and temperature ramp is 30 °C/min. The conversion of THC, CO and NOₓ were calculated from comparing the concentration of the feed gas and the gas at the outlets of the catalysts. Catalyst O and Catalyst P were hydrothermal aged for 4 hours at 1050 °C under lean and stoichiometric conditions, respectively, shown in **Table 12.**

**Table 12**

| Condition | O₂ (%) | H₂O (%) | N₂ |
|---|---|---|---|
| Lean | 20 | 10 | balance |
| Stoichiometric | 0 | 10 | balance |

The HC, CO and NOₓ T₅₀ light off temperatures (T₅₀ is the temperature when the conversion reaching 50%) of the aged Catalyst O and Catalyst P are shown in **Table 13**. The data indicate that, the TWC performance was almost unchanged between use of preformed Pd/Pt DMG and in-situ synthesized Pd/Pt DMG in the washcoat slurry for the catalyst preparation. Therefore, the performance benefit of TWC should be seen with the in-situ synthesized Pd/Pt DMG process compared with conventional Pd/Pt nitrate-precursor use.

**Table 13: SCAT Light Off Test Results after Lean Aging**

| | T₅₀ (°C) after Lean Aging | | | T₅₀ (°C) after Stoichiometric Aging | | |
|---|---|---|---|---|---|---|
| | CO | HC | NOₓ | CO | HC | NOₓ |
| Catalyst O | 273 | 267 | 265 | 212 | 212 | 205 |
| Catalyst P | 273 | 267 | 267 | 212 | 212 | 205 |

## Claims

1. A catalytic article for treating exhaust gas comprising:
a substrate comprising an inlet end and an outlet end with an axial length L;
a first catalytic region comprising a first palladium (Pd) component and a first Pd support material, wherein the substrate is substantially free of the first Pd component.

2. The catalytic article of claim 1, wherein the first catalytic region further comprises a first platinum (Pt) component, wherein the first Pt component is at least partially supported on the first Pd support material, and wherein the substrate is substantially free of the first Pt component.

3. The catalytic article of claim 1 or claim 2, wherein the first Pd support material is a first oxygen storage capacity (OSC) material, a first inorganic oxide, or a combination thereof.

4. The catalytic article of any one of the preceding claims, wherein the substrate is essentially free of the first Pd component.

5. The catalytic article of any one of claims 2 to 4, wherein the substrate is essentially free of the first Pt component.

6. The catalytic article of any one of the preceding claims, wherein the first catalytic region further comprises a first alkaline earth metal.

7. The catalytic article of claim 6, wherein the first alkaline earth metal is barium, or strontium, and mixed oxides or composite oxides thereof.

8. The catalytic article of claim 6 or claim 7, wherein the first alkaline earth metal is present as carbonate or sulfate.

9. A method of making a catalytic article for treating exhaust gas comprising:
a) dissolving a platinum group metal (PGM) complex having a ligand coordinated to the PGM ion;
b) making a PGM complex support slurry;
c) mixing the dissolved PGM complex in a) with the slurry in b);
d) coating the mixture in c) onto a substrate to form a first catalytic region on the substrate;
wherein the ligand is selected from the group consisting of glyoxime; a glyoxime derivative; salicylaldimine, and a salicylaldimine derivative.

10. The method of claim 9, wherein the PGM ion is Pd and/or Pt.

11. The method of claim 9 or 10, wherein the ligand is glyoxime or a glyoxime derivative.

12. A method of manufacturing a catalyst article, the method comprising:
providing a slurry comprising ions of at least one platinum group metal (PGM), a support material and a ligand for coordinating to the ions of at least one PGM;
disposing the slurry on a substrate; and
heating the slurry to form nanoparticles of the PGM on the support material;
wherein the ligand is selected from the group consisting of glyoxime, a glyoxime derivative, salicylaldimine, and a salicylaldimine derivative.

13. The method of claim 12, wherein the PGM comprises palladium (Pd) and/or platinum (Pt).

14. The method of claim 12 or 13, wherein providing a slurry comprises:
a) providing a first slurry comprising the ions of at least one PGM and the support material; and
b) adding the ligand to the slurry.

15. The method of any one of claims 12-14 further comprising a step prior to disposing the slurry on a substrate of adjusting the pH of the slurry to precipitate a complex of the PGM and the ligand.
